Europäisches Patentamt

European Patent Office

Office européen des brevets

(11) Numéro de publication : **0 348 296 B1**

## (12) FASCICULE DE BREVET EUROPEEN

(45) Date de publication du fascicule du brevet :
**12.08.92 Bulletin 92/33**

(51) Int. Cl.⁵ : **B60R 7/06**

(21) Numéro de dépôt : **89401745.8**

(22) Date de dépôt : **20.06.89**

(54) Boîte à gants ou autre réceptacle comportant un couvercle articulé.

(30) Priorité : **20.06.88 FR 8808621**

(43) Date de publication de la demande :
**27.12.89 Bulletin 89/52**

(45) Mention de la délivrance du brevet :
**12.08.92 Bulletin 92/33**

(84) Etats contractants désignés :
**DE GB IT**

(56) Documents cités :
**FR-A- 2 599 072
FR-A- 2 603 062
FR-A- 2 618 739
PATENT ABSTRACTS OF JAPAN, vol. 8, no. 12
(M-269)[1449], 19 janvier 1984; & JP-A-58 174
038 (NISSAN JIDOSHA K.K.)13-10-1983**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Nedellec, Jean-Pierre
4, rue Paul Cézanne
F-78990 Elancourt (FR)**

(74) Mandataire : **Boivin, Claude
9, rue Edouard-Charton
F-78000 Versailles (FR)**

Jouve, 18, rue Saint-Denis, 75001 PARIS

## Description

La présente invention concerne un réceptacle, tel qu'une boîte à gants, qui comporte un couvercle articulé et un vérin propre à assurer l'ouverture du couvercle.

Ce réceptacle est caractérisé en ce que le vérin est disposé sensiblement verticalement, en ce que la partie supérieure du corps du vérin est articulée sur le réceptacle alors que sa tige sort à la partie supérieure du corps et est articulée sur le couvercle, et en ce que ce corps contient un ressort tendant à faire sortir la tige du vérin et comporte au moins un trou calibré propre à freiner la sortie de l'air contenu dans la chambre supérieure du vérin. Ce vérin sert ainsi à la fois à provoquer l'ouverture du couvercle du réceptacle et à amortir le mouvement.

Dans un mode de réalisation particulier de l'invention, le corps du vérin est disposé derrière la paroi arrière du réceptacle et sa tige traverse une ouverture du réceptacle. Grâce à cette disposition, le vérin ne gêne pas la mise en place d'objets dans le réceptacle et est caché à la vue, seule étant visible la partie supérieure de la tige.

On a décrit ci-après, à titre d'exemple non limitatif, une boîte à gants selon l'invention avec référence aux dessins annexés dans lesquels :

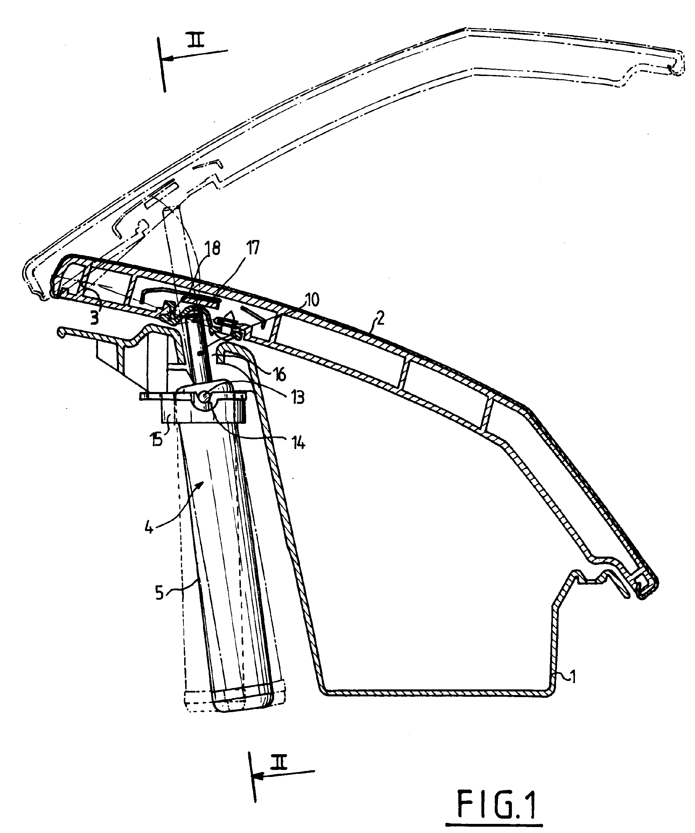

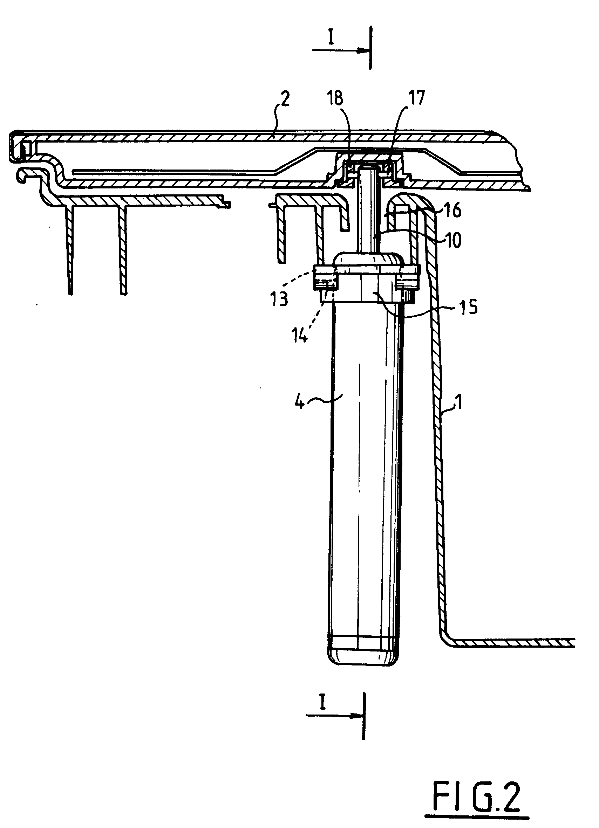

. La Figure 1 est une vue en coupe suivant I-I de la Figure 2;

. La Figure 2 est une vue en coupe suivant II-II de la Figure 1;

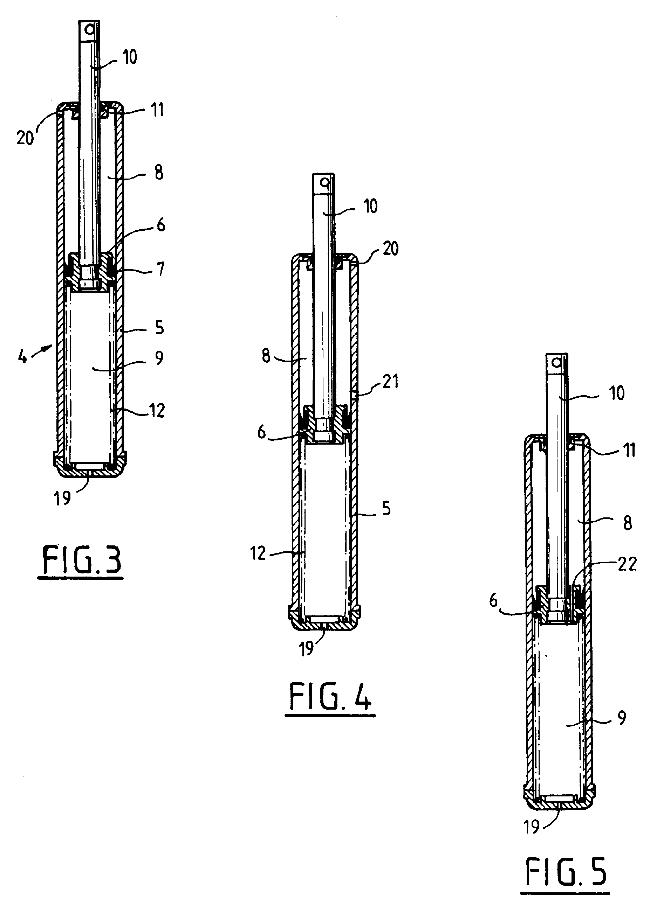

. La Figure 3 est une vue en coupe axiale du vérin;

. Les Figures 4 et 5 sont des vues semblables à la Figure 3 de deux variantes.

Au dessin, on voit une boîte à gants 1 dont le couvercle 2 peut pivoter à sa partie arrière autour d'un axe dont la trace sur le plan de la Figure 1 est au point 3.

Le couvercle 2 est relié à la boîte à gants par un vérin pneumatique sensiblement vertical désigné dans son ensemble par la référence 4 et disposé à gauche de la boîte à gants, derrière la paroi arrière de celle-ci. Ce vérin est constitué par un corps ou cylindre 5 dans lequel peut coulisser un piston 6 muni d'un joint d'étanchéité 7 et divisant l'intérieur du cylindre en deux chambres 8 et 9. Le piston 6 est solidaire d'une tige axiale 10 qui traverse la paroi supérieure du cylindre 5 avec interposition d'un joint 11. Un ressort 12, interposé entre le fond du cylindre et le piston 6, tend à déplacer vers le haut ce piston, donc la tige 10.

Le corps ou cylindre 5 présente à sa partie supérieure deux appendices latéraux coaxiaux 13 dont l'axe est perpendiculaire à celui du cylindre, ces appendices reposant dans une dépression 14 d'une bague 15 qui entoure avec jeu le cylindre et est fixée à la boîte à gants de façon que l'axe des appendices soit parallèle à l'axe de rotation du couvercle. Par ailleurs, l'extrémité de la tige 10 traverse une ouverture 16 de la boîte à gants et est liée par exemple par un axe 17 parallèle audit axe de rotation à une attache 18 vissée dans le couvercle 2. Le vérin peut ainsi pivoter aussi bien par rapport à la boîte à gants que par rapport à son couvercle autour d'axes parallèles à celui des charnières de ce couvercle.

Dans le mode de réalisation de la Figure 3, un trou 19 est prévu dans le fond du cylindre 5 et un orifice calibré 20 dans sa partie supérieure.

Lorsque le verrou maintenant normalement le couvercle 2 dans sa position fermée libère le couvercle, le ressort 12 tend à faire sortir la tige 10 du cylindre 5 donc à ouvrir le couvercle. Ce mouvement est amorti par le freinage de l'air qui est évacué par le trou 20.

Lorsque le couvercle est ouvert, le cylindre 5 du vérin est caché et seule est visible l'extrémité supérieure de la tige 10. Le vérin occupe alors la position représentée en traits mixtes à la Figure 1; on voit à cette Figure en pointillés la position intermédiaire du vérin. La fermeture du couvercle, contre l'action du ressort 12, est aisée car on a un grand bras de levier alors que le vérin 4 agit près des charnières du couvercle 2.

Dans la variante de la Figure 4, le cylindre comporte un trou supplémentaire 21 qui se trouve à la partie inférieure de la chambre 8 quand le couvercle est fermé. Dans ce cas, l'amortissement ne se produit qu'après que le piston 6 est passé au-delà du trou 21.

Dans la variante de la Figure 5, l'orifice calibré 20 est supprimé; par contre le piston 6 comporte un orifice calibré 22 qui permet le passage de l'air de l'une des chambres 8 et 9 à l'autre, en le freinant.

## Revendications

1. Réceptacle, tel qu'une boîte à gants, qui comporte un couvercle articulé (2) et un vérin (4) propre à assurer l'ouverture du couvercle, caractérisé en ce que le vérin (4) est disposé sensiblement verticalement, en ce que la partie supérieure du corps (5) du vérin est articulée sur le réceptacle (1) alors que sa tige (10) sort à la partie supérieure du corps et est articulée sur le couvercle (2), et en ce que ce corps contient un ressort (12) tendant à faire sortir la tige (10) du vérin et comporte au moins un trou calibré (20 ou 22) propre à freiner la sortie de l'air contenu dans la chambre supérieure (8) du vérin.

2. Réceptacle selon la revendication 1, caractérisé en ce que ce corps (5) du vérin (4) est disposé derrière la paroi arrière du réceptacle (1) et en ce que sa tige (10) traverse une ouverture (16) du réceptacle (1).

3. Réceptacle selon la revendication 1 ou 2, caractérisé en ce que l'orifice calibré (20) est prévu dans la partie supérieure du corps (5) du vérin.

4. Réceptacle selon la revendication 1 ou 2, caractérisé en ce que l'orifice calibré (22) est prévu dans le piston (6) du vérin et permet le passage de l'air de l'une des chambres (8 et 9) du vérin à l'autre en le freinant.

5. Réceptacle selon l'une des revendications précédentes, caractérisé en ce que le corps (5) du vérin comporte en outre un trou (19) dans son fond.

6. Réceptacle selon l'une des revendications précédentes, caractérisé en ce qu'il comporte un autre trou (21) qui se trouve à la partie inférieure de la chambre supérieure (8) quand le couvercle (2) est fermé.

7. Réceptacle selon l'une des revendications précédentes, caractérisé en ce que le corps (5) du vérin (4) comporte à sa partie supérieure deux appendices latéraux coaxiaux (13) dont l'axe est perpendiculaire à celui du cylindre et qui reposent dans des dépressions (14) d'une bague (15) qui entoure avec jeu le corps (5) et est fixée au réceptacle (1) de façon que l'axe des appendices (13) soit parallèle à l'axe d'articulation du couvercle.

8. Réceptacle selon l'une des revendications précédentes, caractérisé en ce que l'extrémité de la tige (10) du vérin est liée à une attache (18) vissée sous le couvercle (2) par un axe (17) parallèle à l'axe d'articulation du couvercle.

**Patentansprüche**

1. Behälter wie zum Beispiel ein Handschuhkasten, der einen schwenkbaren Deckel (2) und einen Stellzylinder (4) zum Öffnen des Deckels besitzt, dadurch gekennzeichnet, daß der Stellzylinder weitgehend senkrecht angeordnet ist, das Oberteil des Stellzylinderkörpers schwenkbar an dem Behälter angebracht ist, während seine Kolbenstange (10) aus dem Oberteil des Zylinderkörpers herausragt und schwenkbar am Deckel (2) sitzt und daß der Zylinderkörper eine Feder enthält, die dazu neigt, die Kolbenstange aus dem Stellzylinder herauszudrücken und mindestens ein kalibriertes Loch (20 oder 22) besitzt, durch das der Luftaustritt aus der oberen Kammer des Stellzylinderes gebremst wird.

2. Behälter nach Patentanspruch 1, dadurch gekennzeichnet, daß der Zylinderkörper (5) hinter der Rückwand des Behälters (1) angeordnet ist und seine Kolbenstange (10) durch eine Öffnung (16) in dem Behälter (1) geführt wird.

3. Behälter nach einem beliebigen der Patentansprüche 1 und 2, dadurch gekennzeichnet, daß eine kalibrierte Öffnung (20) im Oberteil des Zylinderkörpers (5) vorgesehen ist.

4. Behälter nach einem beliebigen der Patentansprüche 1 und 2, dadurch gekennzeichnet, daß eine kalibrierte Öffnung (22) im Kolben (6) des Stellzylinders (4) angebracht ist, durch die die Luft aus der Kammer (8) ind die Kammer (9) und umgekehrt gelangen kann und damit eine Bremswirkung ausübt.

5. Behälter nach einem beliebigen der obigen Patentansprüche, dadurch gekennzeichnet, daß der Zylinderkörper (5) zudem ein Loch (19) in seinem Boden besitzt.

6. Behälter nach einem beliebigen der obigen Patentansprüche, dadurch gekennzeichnet, daß der Zylinderkörper (5) ein weiteres Loch (21) im Unterteil der oberen Kammer (8) besitzt, wenn der Deckel (2) geschlossen ist.

7. Behälter nach einem beliebigen der obigen Patentansprüche, dadurch gekennzeichnet, daß der Zylinderkörper (5) an seiner Oberseite zwei achsgleiche Seitenstücke (13) besitzt, deren Achse senkrecht zur Zylinderachse steht und welche in einer Vertiefung (14) eines Ringes (15) liegen, der den Zylinderkörper (5) mit einem gewissen Spiel umgibt und derart an dem Behälter (1) befestigt ist, daß die Achse der Seitenstücke (13) parallel zur Schwenkachse des Deckels verläuft.

8. Behälter nach einem beliebigen der obigen Patentansprüche, dadurch gekennzeichnet, daß das Ende der Kolbenstange (10) über eine parallel zu der o.a. Schwenkachse verlaufenden Achse (17) mit einer am Deckel (2) festgeschraubten Befestigung (18) verbunden ist.

**Claims**

1. Receptacle, such as a glove box, comprising an articlated cover (2) and a jack (4) able to open the cover, wherein the jack (4) is disposed approximately vertically, wherein the upper portion of the body (5) of the jack is joined onto the receptacle (1) when its rod (10) comes out of the upper portion of the body and is joined onto the cover (2), and wherein this body contains a spring (12) tending to make the rod (10) come out of the jack and comprises at least one calibrated hole (20 or 22) able to brake the outlet of the air contained in the upper chamber (8) of the jack.

2. Receptacle according to claim 1, wherein this body (5) of the jack (4) is disposed behind the rear wall of the receptacle (1) and wherein its rod (10) traverses one opening (16) of the receptacle (1).

3. Receptacle according to claim 1 or 2, wherein the calibrated orifice (20) is provided in the upper portion of the body (5) of the jack.

4. Receptacle according to claim 1 or 2, wherein the calibrated orifice (22) is provided in the piston (6) of the jack and allows for the air to pass from one of the chambers (8 and 9) of the jack to the other by braking it.

5. Receptacle according to any one of the preceding claims, wherein the body (5) of the jack further comprises a hole (19) at its bottom.

6. Receptacle according to any one of the preceding claims, wherein it comprises another hole (21) located at the lower portion of the upper chamber (8) when the cover (2) is closed.

7. Receptacle according to any one of the preceding claims, wherein the body (5) of the jack (4) comprises at its upper portion two lateral coaxial lengthening pieces (13) whose axis is perpendicular to that of the cylinder and which rest in the depressions (14) of a ring (15) surrounding with clearance the body (5) and is fixed to the receptacle (1) so that the axis of the lengthening pieces is parallel to the spin axis of the cover.

8. Receptacle according to any one of the preceding claims, wherein the extremity of the rod (10) of the jack is linked to a fastener (18) screwed under the cover (2) by a spindle (17) parallel to the spin axis of the cover.

FIG.1

FIG.2

FIG.3

FIG. 4

FIG. 5